# FASCICULE DE BREVET EUROPEEN

(11) **EP 0 798 458 B1**
(45) Date de publication et mention de la délivrance du brevet: **06.03.2002**
(21) Numéro de dépôt: 97420052.9
(22) Date de dépôt: 26.03.1997
(51) Int. Cl.: F02M 37/10, B60K 15/077

(54) **Dispositif de pompage immergé dans un réservoir pour véhicule automobile**
In den Tank eines Kraftfahrzeuges eingetauchte Pumpvorrichtung
Pumping device immerged in motor vehicle tank

(30) Priorité: 27.03.1996 FR 9604076
(43) Date de publication de la demande: 01.10.1997
(73) Titulaire: AISAN BITRON EUROPE SA, 58000 Nevers (FR)
(72) Inventeur: Thomas, Gérard, 58139 Guerigny (FR); Levitte, Dominique, 58000 Nevers (FR)
(74) Mandataire: Myon, Gérard Jean-Pierre

(56) Documents cités:
- EP-A- 0 562 536
- EP-A- 0 702 142
- DE-A- 4 242 242
- DE-A- 4 414 281
- DE-A- 4 433 301
- US-A- 5 195 494

## Description

La présente invention a pour objet l'intégration des fonctions filtrage et régulation de pression de carburant issu d'un dispositif de pompage immergé dans le réservoir à carburant d'un véhicule automobile mû par un moteur à combustion interne.

On connaît jusqu'à présent, en utilisation dans ces véhicules, des dispositifs de pompage qui comprennent généralement une platine destinée à être fixée sur une paroi du réservoir à carburant, supportant au moins un sous-ensemble comportant une pompe électrique avec ses accessoires (un bac de tranquillisation, dit aussi piège à carburant, une crépine d'aspiration, un moyen de suspension et de filtrage des bruits et vibrations émis par la pompe, les tuyaux et branchements électriques nécessaires), et le plus souvent un sous-ensemble de mesure du niveau de carburant.

Cette platine comporte également une tubulure de sortie, sur laquelle est branché un tuyau conduisant le carburant mis en pression par la pompe vers un filtre à carburant à mailles très fines, placé généralement vers le réservoir. Ce filtre est constitué d'un boîtier avec une tubulure d'entrée et une de sortie et contient une cartouche filtrante.

A la sortie de ce filtre est branché un tuyau qui chemine sous le véhicule (en général de l'arrière de celui-ci où est logé le réservoir à carburant vers l'avant où se trouve le moteur) et emmène le carburant filtré sous pression vers la rampe d'injection du moteur, où un régulateur maintient ce carburant à la pression nécessaire, quelle que soit la consommation instantanée du moteur. Du fait du principe de fonctionnement de ce régulateur, une partie plus ou moins importante du carburant, non utilisée par le moteur, doit être renvoyée au réservoir, par un deuxième tuyau branché sur ce régulateur et cheminant également sous le véhicule pour venir à une deuxième tubulure, dite de retour, faisant partie de la platine de l'ensemble immergé.

Cette platine assure le passage étanche de ces deux tubulures, le maintien en position des sous-ensembles décrits, la traversée étanche des câbles électriques alimentant la pompe électrique et le dispositif de mesure du niveau de carburant. Elle peut également supporter d'autres éléments tels qu'une mise à l'air libre, ou un clapet anti-retournement.

Cette platine doit permettre une parfaite fermeture étanche du réservoir, tout au long de la vie du véhicule, et même après un choc violent sur le véhicule, lors d'une collision arrière par exemple.

L'évolution des réglementations visant à la sécurité et au respect de l'environnement a conduit les constructeurs automobiles à envisager la modification du circuit de carburant tel que décrit ci-dessus, dans le sens d'une réduction du nombre et de la longueur des tuyaux situés à l'extérieur du réservoir à carburant, ainsi que du nombre inévitable de raccords de liaisons de ces tuyaux.

Cette modification consiste selon le document EP-A-0 702 142 à incorporer au dispositif immergé de pompage le filtre à carburant et le régulateur de pression qui se trouvent alors à l'intérieur du réservoir. La platine ne comporte plus qu'une unique tubulure sur laquelle est branché un unique tuyau conduisant au moteur la juste quantité de carburant nécessaire, filtrée et régulée en pression.

L'objet de cette invention est une disposition des différentes parties constitutives du dispositif de pompage immergé dans le réservoir, permettant de réduire les coûts de fabrication par réduction du nombre de pièces nécessaires à l'interconnexion de ces parties constitutives (essentiellement le sous-ensemble de pompage, le filtre à carburant et le régulateur de pression), tout en garantissant le niveau de fiabilité et de sécurité requis, même après intervention de maintenance, pour changer la cartouche filtrante par exemple.

Le dispositif de pompage, selon l'invention, comprend deux cavités contiguës, dont la première constitue un piège à carburant et contient un sous-ensemble de pompage, et dont la seconde contient une cartouche filtrante et est reliée au refoulement du sous-ensemble de pompage, à un régulateur de pression, et à un conduit d'une platine de fixation pour l'alimentation en carburant du véhicule. Ce dispositif est caractérisé en ce que ces deux cavités sont aménagées dans un corps principal moulé d'une seule pièce, ladite première cavité ayant son ouverture principale vers le haut et ladite seconde cavité étant accolée à la première et ayant son ouverture principale dirigée sur le côté et fermée par un couvercle étanche qui est aménagé pour recevoir le régulateur de pression et comporte un conduit pour le retour du carburant vers la première cavité du corps principal, à partir de la sortie du régulateur de pression.

Le dessin annexé, donné à titre d'exemple, permettra de mieux comprendre l'invention, les caractéristiques qu'elle présente et les avantages qu'elle est susceptible de procurer:
- la figure 1 est une vue en coupe verticale montrant un dispositif de pompage, muni du filtre à carburant et du régulateur de pression suivant la présente invention.
- la figure 2 est une coupe verticale illustrant une variante de l'invention.
- la figure 3 est une coupe verticale représentant une autre variante de l'invention.

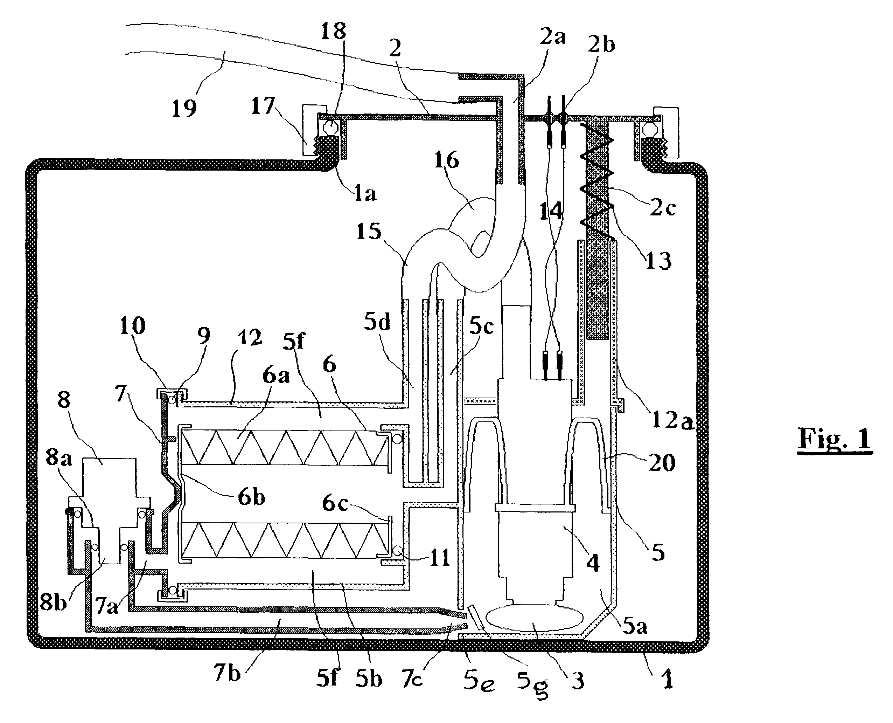

On a représenté en figure 1 un réservoir à carburant 1, qui comporte une ouverture 1a, sur laquelle est fixée de façon étanche une platine 2, par le moyen connu d'un joint 18 et d'un écrou 17.

Cette platine constituée préférentiellement d'une seule pièce moulée en matière thermoplastique comporte au moins une extension 2c qui positionne et maintient plaqué sur le fond du réservoir 1 un corps principal 5 du dispositif de pompage immergé. Le corps principal 5 est plaqué par l'intermédiaire d'au moins une colonne de guidage 12a intégrée au couvercle 12 qui coopère avec l'extension 2c de la platine 2 et un ressort 13. La platine 2 comporte également un conduit 2a formant un raccord pour le branchement de tuyaux 15, 19, l'un 15 à l'intérieur du réservoir 1 et l'autre 19 à l'extérieur, constituant ainsi une traversée étanche du carburant. De même, plusieurs barrettes conductrices 2b sont surmoulées lors de la fabrication de la platine 2 pour former autant de traversées étanches, et isolées entre elles, utilisées pour l'alimentation électrique d'une pompe 4, par des câbles 14, et un éventuel ensemble de mesure du niveau de carburant (non représenté).

Le corps principal 5 est constitué préférentiellement d'une seule pièce moulée en matière thermoplastique. Il se compose principalement d'une première cavité 5a dont l'ouverture principale est tournée vers le haut et d'une seconde cavité 5b, accolée à la première, mais dont l'ouverture principale est tournée vers le côté de manière que les axes de ces deux cavités forment un angle voisin d'un angle droit. Cet angle, représenté droit en figure 1, peut en pratique être plus aigu ou plus obtus selon la forme du réservoir 1 et selon les contraintes de passage du dispositif de pompage immergé par l'ouverture 1a.

La première cavité 5a contient la pompe électrique 4 avec sa crépine d'aspiration 3, fixées élastiquement par un dispositif 20, par exemple tel que celui qui est décrit dans la demande de brevet français FR-95 13 436 appartenant au Demandeur. La crépine 3 est un premier filtre destiné à éliminer les particules les plus grossières qui pourraient se trouver dans la carburant. La cavité 5a possède vers sa base un orifice 5e permettant d'amener le carburant à proximité de la pompe 4. La cavité 5a constitue le piège à carburant.

La seconde cavité 5b contient une cartouche filtrante 6 constituée d'un média filtrant très fin 6a maintenu entre deux flasques, l'un 6b plein et l'autre 6c percé en son centre. La cartouche 6 est maintenue en position dans l'axe de la cavité 5b, du côté de la cavité 5a par un joint d'étanchéité 11 en regard du flasque percé 6c et du côté de l'ouverture principale de la cavité 5b par un couvercle 7, de telle sorte que l'intérieur et l'extérieur de la cartouche sont isolés l'un de l'autre et de telle sorte qu'il reste un espace en forme de couronne annulaire entre l'extérieur de la cartouche 6 et les parois de la cavité 5b.

Le couvercle 7 assure la fermeture étanche de la cavité 5b par un joint 9 et un dispositif 10. Le dispositif 10 est un système assurant la compression nécessaire du joint 9 et résistant à l'effort dû à la pression du carburant sur le couvercle 7, tel que, à titre d'exemples non limitatifs, une bride ou une fermeture à baïonnette ou crabots. On peut même envisager la suppression des pièces 9 et 10 et la fixation du couvercle 7 sur la cavité 5b par soudure ou collage, si le remplacement de la cartouche filtrante 6 n'est pas envisagé en maintenance du véhicule.

Dans le couvercle 7, constitué préférentiellement d'une seule pièce moulée en matière thermoplastique, est aménagé un logement 7a dont les formes permettent l'installation d'un régulateur de pression 8. Ce logement 7a, d'une part met en communication l'enceinte constituée par la cavité 5b et le couvercle 7 avec l'entrée 8a du régulateur, et d'autre part et indépendamment relie la sortie 8b dudit régulateur avec une extension en forme de conduit 7b, partie intégrante du couvercle moulé 7. Le conduit 7b se termine par un dispositif 7c à profil conique qui pénètre à l'intérieur de l'orifice 5e.

Dans le corps principal 5 est aménagé un premier conduit 5c qui relie la cavité 5b par l'intermédiaire d'un tuyau souple 16 à la pompe 4. Un second conduit 5d est raccordé à celui 2a de la platine 2 au moyen du tuyau 15 pour relier la cavité 5b au tuyau 19 circulant sous le véhicule. Ainsi, les conduits 5c, 5d sont destinés respectivement à créer une entrée et une sortie pour la cavité 5b contenant la cartouche 6.

Le cheminement du carburant contenu dans le réservoir 1 est le suivant :

Le carburant pénètre, par l'orifice 5e, dans la cavité 5a où il est aspiré par la pompe 4 à travers la crépine 3 et refoulé sous pression dans le tuyau souple 16 branché sur le conduit 5c. Ce tuyau 16, outre sa fonction de véhiculer le carburant, assure le respect de l'isolation vibratoire de la pompe 4 par rapport au corps 5.

Le conduit 5c est en communication étanche avec l'intérieur de la cartouche filtrante 6, ce qui oblige le carburant à traverser le média filtrant 6a pour arriver dans l'espace annulaire externe à la cartouche 6 qui est en communication avec le logement 7a du couvercle 7 et le conduit 5d du corps principal 5.

La pression dans cette chambre annulaire est donc appliquée au régulateur 8 qui, lorsque cette pression dépasse la consigne pré-fixée, ouvre un clapet interne qui décharge le carburant par le conduit de sortie 8b, tandis que le carburant nécessaire à la consommation du moteur sort par le conduit 5d qui est raccordé par le tuyau 15 au conduit 2a de la platine, lui-même raccordé au tuyau 19 qui est donc l'unique tuyau extérieur au réservoir 1 conduisant le carburant parfaitement filtré et sous la bonne pression jusqu'au moteur.

La partie de carburant non consommé retourne de la sortie 8b du régulateur 8 vers le piège à carburant ou cavité 5a, via le conduit 7b. La forme particulière de l'extrémité 7c de ce conduit, et sa disposition en regard de l'orifice 5e, crée simultanément une aspiration du carburant contenu dans le réservoir 1, et un refoulement du carburant par l'orifice 5e, dans la cavité 5a, autour de la crépine d'aspiration 3. Ce dispositif est particulièrement utile lorsque le niveau de carburant est très faible et évite un désamorçage intempestif de la pompe 4 ; il peut être complété par un clapet 5g empêchant, ou du moins ralentissant, la vidange de la cavité 5a.

Les avantages de cette disposition sont une grande compacité, une réduction du nombre de pièces, notamment les conduits et tuyaux qui seraient normalement nécessaires à l'interconnexion de tous les composants et qui sont ici simplement issus de pièces simples à mouler.

Un autre avantage est la facilité de remplacement de la cartouche filtrante 6, par simple ouverture d'un couvercle, sans aucune opération de débranchement-rebranchement de tuyaux ou de connexions électriques, ce qui assure une grande fiabilité à l'ensemble, même après une intervention en service après vente. De plus, la forme de cette cartouche 6, conjointement aux formes aménagées dans la cavité 5b et sous le couvercle 7, ne permet qu'un sens de montage de celle-ci (ouverture 6c tournée vers l'orifice du conduit 5c).

Une autre caractéristique particulièrement avantageuse est que les pièces renfermant des volumes sous pression (pompe 4, tuyau 16, conduit 5c, cavité 5b, cavité 7a et couvercle 7, conduit 5d) sont séparées totalement de la platine qui ne contient que le conduit 2a (raccordé au conduit 5d par le tuyau 15), tubulure inévitable pour le passage du carburant sous pression. Ceci accroît encore la sécurité de l'ensemble car la platine 2 qui garantit la parfaite étanchéité du réservoir au niveau de l'orifice 1a ne subit pas les contraintes physiques et mécaniques dues à la pression variable et permanente du carburant.

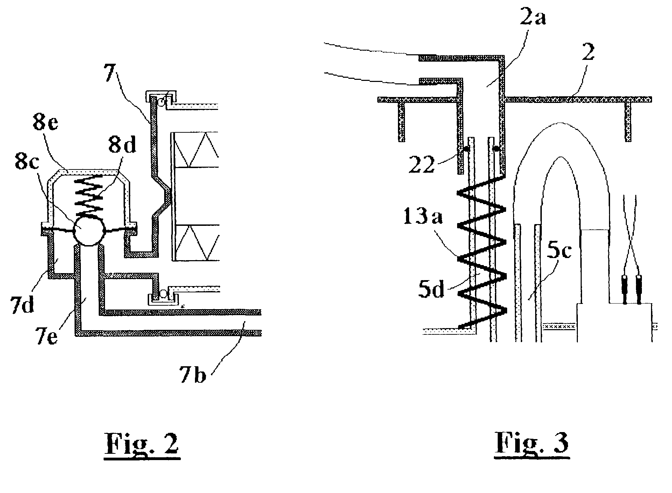

Un autre avantage encore est que le régulateur de pression 8 est fixé sur une pièce simple de fabrication, dont on peut concevoir des variantes pour l'utilisation de régulateurs de formes ou dimensions différentes, et en particulier une variante décrite ci-après et illustrée en figure 2.

Cette variante prévoit l'intégration du régulateur 8 au couvercle 7 précédemment décrit. Pour cela est aménagé dans le couvercle 7 un logement 7d recevant une membrane 8c équipée d'un clapet opérant en regard d'un siège et conduit 7e aménagé dans le couvercle 7. Un ressort 8d agit sur cette membrane et un capot 8e ferme le tout. Les pièces 8c et 8d sont similaires à celles des régulateurs de pression actuellement utilisés et fonctionnent selon le principe connu de ces régulateurs :
- au repos le clapet de la membrane 8c maintient l'orifice 7e fermé,
- lorsque la pression dépasse un seuil préfixé par la valeur du ressort taré 8d, le clapet 8c recule et le carburant part par le conduit 7e, ce qui maintient le carburant situé dans la cavité 5d à la valeur de pression souhaitée.

Par une variante illustrée en figure 3 on peut, lorsque la disposition géométrique des éléments constituants le permet, supprimer le tuyau 15, par prolongement des conduits 5d et 2a, de telle sorte qu'ils puissent coulisser l'un dans l'autre de manière étanche grâce à un joint 22 disposé coaxialement aux deux conduits 5d et 2a.

Ces deux conduits emmanchés créent une colonne de guidage sur laquelle peut être monté un ressort 13a permettant le plaquage du dispositif de pompage immergé sur le fond du réservoir 1, ceci en complément, ou même en remplacement de la colonne de guidage 12a décrit ci-dessus.

## Revendications

1. Dispositif de pompage de carburant pour véhicule automobile, comprenant deux cavités contiguës, dont la première (5a) constitue un piège à carburant et contient un sous-ensemble de pompage (3, 4, 20), et dont la seconde (5b) contient une cartouche filtrante (6) et est reliée au refoulement du sous-ensemble de pompage, à un régulateur de pression (8), et à un conduit (2a) d'une platine de fixation (2) pour l'alimentation en carburant du véhicule, **caractérisé en ce que** ces deux cavités sont aménagées dans un corps principal (5) moulé d'une seule pièce, ladite première cavité (5a) ayant son ouverture principale vers le haut et ladite seconde cavité (5b) étant accolée à la première et ayant son ouverture principale dirigée sur le côté et fermée par un couvercle (7) étanche qui est aménagé pour recevoir le régulateur de pression (8) et comporte un conduit (7b) pour le retour du carburant vers la première cavité (5a) du corps principal (5), à partir de la sortie (8b) du régulateur de pression (8).

2. Dispositif de pompage suivant la revendication 1, **caractérisé en ce que** la seconde cavité (5b) comporte un premier conduit (5c) qui est relié par un tuyau souple (16) au refoulement du sous-ensemble de pompage (3, 4, 20) et un second conduit (5d) qui est raccordé au conduit (2a) de la platine de fixation (2) du réservoir de carburant (1).

3. Dispositif de pompage suivant la revendication 1 ou 2, **caractérisé en ce que** le couvercle (7) est aménagé pour recevoir directement les pièces constitutives (8c, 8d, 8e) d'un régulateur de pression.

4. Dispositif de pompage suivant l'une des revendications 1 à 3, **caractérisé en ce que** les formes de la cartouche filtrante (6), de la seconde cavité (5b) et du couvercle (7) sont prévues pour ne permettre qu'un seul sens de montage de la cartouche filtrante (6).

5. Dispositif de pompage suivant l'une des revendications 1 à 4, **caractérisé en ce que** le corps (5) est positionné et plaqué sur le fond du réservoir (1) par l'intermédiaire d'au moins une extension (2c) solidaire de la platine de fixation (2) qui coopère avec une colonne de guidage (12a) associé avec un ressort de pression (13).

6. Dispositif de pompage suivant l'une des revendications 1 à 5, **caractérisé en ce que** le conduit (7b) pour le retour du carburant débouche dans un orifice (5e) de plus grand diamètre pour permettre l'aspiration directe du carburant dans la première cavité (5a), à partir du réservoir (1).

7. Réservoir de carburant pour véhicule automobile, **caractérisé en ce qu'**il comprend un dispositif de pompage selon l'une des revendications 1 à 6.

## Patentansprüche

1. Kraftstoff-Pumpvorrichtung für Kraftfahrzeuge, umfassend zwei aneinandergrenzende Hohlräume, von denen der erste (5a) eine Kraftstoff-Falle bildet und eine Pump-Untergruppe (3, 4, 20) enthält und von denen der zweite (5b) eine Filterkartusche (6) enthält und an die Förderung der Pump-Untergruppe, einen Druckregler (8) und an eine Leitung (2a) einer Halteplatte (2) für die Kraftstoffzufuhr des Kraftfahrzeugs angeschlossen ist, **dadurch gekennzeichnet, daß** diese zwei Hohlräume in einem aus einem einzigen Stück gegossenen Hauptkörper (5) angeordnet sind, wobei der erste Hohlraum (5a) seine Hauptöffnung nach oben hin hat und der zweite Hohlraum (5b) an den ersten angebaut ist und eine Hauptöffnung hat, die zur Seite gerichtet und mittels einer Dichtkappe (7) verschlossen ist, die zum Aufnehmen des Druckreglers (8) angeordnet ist und eine Leitung (7b) zum Rückführen des Kraftstoffs hin zum ersten Hohlraum (5a) des Hauptkörpers (5) vom Ausgang (8b) des Druckreglers (8) an umfaßt.

2. Pumpvorrichtung nach Anspruch 1, **dadurch gekennzeichnet, daß** der zweite Hohlraum (5b) eine erste Leitung (5c), die mittels eines flexiblen Schlauches (16) an die Förderung der Pump-Untergruppe (3, 4, 20) angeschlossen ist, und eine zweite Leitung (5d) aufweist, die an die Leitung (2a) der Halteplatte (2) des Kraftstoffbehälters (1) angeschlossen ist

3. Pumpvorrichtung nach Anspruch 1 oder 2, **dadurch gekennzeichnet, daß** die Kappe (7) zum direkten Aufnehmen der Bauteile (8c, 8d, 8e) eines Druckreglers ausgebildet ist.

4. Pumpvorrichtung nach einem der Ansprüche 1 bis 3, **dadurch gekennzeichnet, daß** die Formen der Filterkartusche (6), des zweiten Hohlraumes (5b) und der Abdeckung (7) derart vorgesehen sind, daß nur eine einzige Montagerichtung der Filterkartusche (6) gestattet ist.

5. Pumpvorrichtung nach einem der Ansprüche 1 bis 4, **dadurch gekennzeichnet, daß** der Körper (5) auf dem Boden des Behälters (1) mittels wenigstens einer einstückig mit der Halteplatte (2) verbundenen Erweiterung (2c) angeordnet und aufgelegt ist, die mit einer mit einer Druckfeder (13) verbundenen Führungssäule (12a) zusammenwirkt.

6. Pumpvorrichtung nach einem der Ansprüche 1 bis 5, **dadurch gekennzeichnet, daß** die Leitung (7b) zum Zurückführen des Kraftstoffs in eine Öffnung (5e) mit größerem Durchmesser mündet, um eine direkte Kraftstoff-Ansaugung in den ersten Hohlraum (5a) vom Behälter (1) aus zu ermöglichen.

7. Kraftstoffbehälter für ein Kraftfahrzeug, **dadurch gekennzeichnet, daß** dieser eine Pumpvorrichtung nach einem der Ansprüche 1 bis 6 aufweist.

## Claims

1. Fuel pumping device for a motor vehicle, comprising two contiguous cavities, the first (5a) of which constitutes a fuel trap and contains a pumping subassembly (3, 4, 20), and the second (5b) of which contains a filter cartridge (6) and is connected to the delivery side of the pumping subassembly, to a pressure regulator (8) and to a pipe (2a) of a mounting plate (2) for supplying the vehicle with fuel, **characterized in that** these two cavities are formed in a main body (5) moulded as a single piece, the said first cavity (5a) having its main opening upwards and the said second cavity (5b) being up against the first and having its main opening facing to the side and closed by a sealed lid (7) which is designed to accommodate the pressure regulator (8) and has a pipe (7b) for returning fuel to the first cavity (5a) of the main body (5) from the outlet (8b) of the pressure regulator (8).

2. Pumping device according to Claim 1, **characterized in that** the second cavity (5b) has a first pipe (5c) which is connected by a flexible hose (16) to the delivery side of the pumping subassembly (3, 4, 20) and a second pipe (5d) which is connected to the pipe (2a) of the mounting plate (2) of the fuel tank (1).

3. Pumping device according to Claim 1 or 2, **characterized in that** the lid (7) is designed to directly accommodate the constituent parts (8c, 8d, 8e) of a pressure regulator.

4. Pumping device according to one of Claims 1 to 3, **characterized in that** the shapes of the filter cartridge (6), of the second cavity (5b) and of the lid (7) are designed to allow the filter cartridge (6) to be mounted just one way round.

5. Pumping device according to one of Claims 1 to 4, **characterized in that** the body (5) is positioned and pressed against the bottom of the tank (1) via at least one extension (2c) secured to the mounting plate (2) which collaborates with a guide post (12a) associated with a pressing spring (13).

6. Pumping device according to one of Claims 1 to 5, **characterized in that** the pipe (7b) for returning the fuel opens into a larger-diameter orifice (5e) to allow fuel to be drawn directly from the tank (1) into the first cavity (5a).

7. Motor vehicle fuel tank, **characterized in that** it comprises a pumping device according to one of Claims 1 to 6.
